# EUROPÄISCHE PATENTSCHRIFT

(11) **EP 2 522 928 B1**
(45) Veröffentlichungstag und Bekanntmachung des Hinweises auf die Patenterteilung: **21.12.2016**
(21) Anmeldenummer: 12003463.2
(22) Anmeldetag: 05.05.2012
(51) Int. Cl.: F24J 2/52, A47F 7/00, A47G 33/12, E04G 1/32, E04H 12/22

(54) **Vorrichtung für die Montage von Aufbauten auf einer flachen Ebene oder einer Ebene mit geringer Neigung**
Device for assembling structures on a flat surface or a surface with a low incline
Dispositif destiné au montage de constructions sur une surface plane ou une surface à faible inclinaison

(30) Priorität: 07.05.2011 DE 202011100399 U
(43) Veröffentlichungstag der Anmeldung: 14.11.2012
(73) Patentinhaber: Sodeik, Clemens, 79541 Lörrach (DE); Sodeik, Matthias, 79400 Kandern (DE)
(72) Erfinder: Sodeik, Clemens, 79541 Lörrach (DE); Sodeik, Matthias, 79400 Kandern (DE)
(74) Vertreter: Ebert, Jutta

(56) Entgegenhaltungen:
- EP-A2- 1 376 029
- US-B1- 7 921 843

## Beschreibung

Die Efindung bezieht sich auf eine Vorrichtung für die Montage von Aufbauten auf flachem Untergrund oder einer flachen Ebene oder einem Untergrund oder einer Ebene mit geringer Neigung oder mit geringen Unebenheiten, mit einem **oder mehreren Gewichtelementen** die zur Positionssicherung wobei die Aufbauten von einem Träger getragen sind.

Bei der Montage von Aufbauten auf einem flachen Untergrund oder einer flachen Ebene oder einem Untergrund oder einer Ebene mit geringer Neigung oder mit geringen Unebenheiten, z.B. von Solaranlagen auf Flachdächern oder auch auf der Erdoberfläche oder beim Aufbau von Messeständen und Messezelten, besteht das Problem der Verankerung des Aufbaus in der tragenden Fläche oder im Untergrund.

Durch die DE 84 18 908 U1 ist eine Haltevorrichtung mit einer Halterung für Sonnenkollektoren auf ziegelgedeckten Dächern und Flachdächern bekannt, wobei als Halterung ein Befestigungsprofil mit einer Halteplatte dient. Die Halterung kann über die Halteplatte mit einem Flachdach bzw. mit auf einem Flachdach in entsprechenden Abständen angeordneten Leisten oder Schienen verschraubtwerden. Die Halteplatte geht dabei in den Befestigungsbereich für Befestigungselemente von Sonnenkollektoren über. Ein entscheidender Nachteil dieser Vorrichtung ist, dass zu ihrer Befestigung an einem Flachdach oder einem Dachelement sowohl die Halteplatte als auch das Flachdach oder das Dachelement mit Bohrungen zur Aufnahme der jeweiligen Befestigungschrauben versehen werden müssen. Durch diese Bohrungen besteht die Gefahr von Undichtigkeiten am Dach und nachfolgenden Wasserschäden in dem betreffenden Gebäude, die dann häufig erst sehr spät erkannt werden.

Mit der DE 10 2009 004 260 A1 bzw. der WO 2010/079131 A2 wird ein Dachelement zur Halterung von Solarmodulen vorgeschlagen, das einen im wesentlichen flächigen Dachbereich, der in erster Linie dem Wetterschutz dient, und einen Befestigungsbereich für Solarmodule umfasst. Der Befestigungsbereich ist dabei in Form einer mit einer Befestigungsnut versehenen Ausbuchtung im Dachbereich ausgebildet. Befestigungsbereich und Dachbereich gehen also ineinander über und sind vorzugsweise einstückig ausgebildet. Mehrere solcher Dachelemente können untereinander, z.B. mittels Nut und Feder, zu einer größeren Dachfläche verbunden werden. Die Haltevorrichtung für Solarmodule ist somit unmittelbar in eine Dachfläche integriert. Undichtigkeiten am Dach können damit weitgehend vermieden werden. Allerdings ist man durch die in ihren Abständen und Positionen unveränderlich festgelegten Ausbuchtungen, also Befestigungsbereiche für die Solarmodule, sehr unflexibel bei der Montage der Solarmodule.

Wenn bei der Montage von Aufbauten auf einer flachen Ebene oder einer Ebene mit geringer Neigung oder einer Ebene mit gewissen Unebenheiten, z.B. von Solaranlagen auf Flachdächern, Bohrungen oder sonstige Durchbrüche in der tragenden Fläche vermieden werden sollen, ist besonders zu beachten, dass solche Aufbauten starken, vor allem wetterbedingten Kräften, und zwar sowohl Sogkräften, z.B. durch Wind oder Sturm, als auch Druckkräften durch das Gewicht des Aufbaus selbst und gegebenenfalls zusätzlich durch Schneeauflagen ausgesetzt sind. Es muss vermieden werden, dass ein Aufbau durch Sog angehoben und im schlimmsten Fall auch weggetragen werden kann, aber auch eine ungünstige Kraftverteilung auf die tragende Fläche bei Druckbelastung und daraus resultierende Schäden an der tragenden Fläche sind zu vermeiden.

Es werden inzwischen Solaranlagen auch direkt auf der Erdoberfläche errichtet, auch dabei besteht das Problem der Verankerung des Aufbaus in der tragenden Fläche. Die Verankerung direkt im Erdreich ist problematisch und je nach der Beschaffenheit des Erdreichs vor allem unsicher. Dasselbe gilt z.B. beim Aufbau von Messeständen oder Messezelten oder Absperrungselemente auf dem Erdboden, der sehr unterschiedlich beschaffen sein kann; er kann eher weich und nachgiebig oder eher undurchdringlich sein.

Bei der Aufständerung von Solaranlagen auf Flachdächern oder auch auf dem Erdboden ist es bekannt, die tragende Konstruktion mit Gewichten, z.B. bestehend aus Betonstein, zu beschweren. Nach einem bekannten System werden solche Gewichte in einem bestimmten Raster auf der tragenden Fläche angeordnet. Für die Anwendung auf einem Flachdach können diese Gewichte mit einem Schutzvlies oder anderen Schutzmatten unterlegt sein, um die Dachhaut vor mechanischer Beschädigung zu schützen. In den Gewichten sind Gewindestücke verankert, an denen Lagerschienen angeschlossen werden, an welchen dann Aufständerungsstützen und an diesen wiederum z.B. die Trägerprofile für Solarmodule montiert werden können. Die Gewichte können verhindern, dass die Anlage durch Sog angehoben und womöglich fortgetragen wird, über ihre Auflagefläche lässt sich eine durch Belastung entstehende Druckkraft nur einigermaßen, aber nicht immer zufriedenstellend über die tragende Fläche verteilen. Um die Gewichte oder Steine mit den Gewindestücken ausrüsten zu können, müssen sie mit entsprechenden Bohrungen versehen werden, in denen die Gewindestücke eingedübelt werden können. Dies ist umständlich und arbeitsintensiv, verursacht Staub und Schmutz und bietet auch das Risiko der Beschädigung von Dachflächen während der Montagearbeiten. Der Gewichtswerkstoff muss außerdem geeignet sein für die sichere Anbringung solcher Gewindestücke, d.h. ein Brechen des Werkstoffes und Ausreißen der Gewindestücke muss verhindert werden.

Durch die DE 201 12 824 U1 ist eine Profilschiene bekannt, die bei der Aufständerung einer Solaranlage auch auf einem Flachdach zur Anwendung kommen kann. Über z.B. drei solche parallel verlaufende Profilschienen können beabstandet aus Schienen zusammengesetzte Montagedreiecke errichtet werden, an denen Solarmodule mit Hilfe einer speziellen Befestigungsvorrichtung befestigt werden können. Dabei wird vorgeschlagen, beidseitig am Boden der Profilschienen einen Werkstoffstreifen vorzusehen, der jeweils um ein der Breite der Profilschiene entsprechendes Maß übersteht. Bei der Anwendung auf einem Flachdach sollen auf die Werkstoffstreifen zweier benachbarter Profilschienen Beton- oder Steinplatten gelegt werden, um die Profilschienen auf dem Untergrund festzuhalten. Das auf den Profilschienen lastende Gewicht der Stein- oder Betonplatten kann zwar verhindern, das ein auf diesen Schienen errichteter Aufbau durch Sog angehoben oder sogar weggetragen wird, aber das Gewicht der Stein- oder Betonplatten und eine zusätzliche Belastung des Aufbaus, z.B. durch Schneeauflage, wird durch die trotz der überstehenden Werkstoffstreifen noch immer geringe Auflagefläche der Profilschienen nur ungünstig auf den Untergrund verteilt. Die Gewichte leisten selbst also keinen aktiven Beitrag zu einer gleichmäßigen und möglichst großflächigen Einleitung der Druckkräfte. Es ergibt sich eine hohe Druckwirkung nur entlang der Profilschienen. Die Profilschienen können in weichen Untergrund, z.B. in Folienflachdächer oder Schutzmatten, die zum Schutz der Dachhaut eines Flachdaches verlegt sind, mitsamt den auf ihnen lastenden Aufbauten und Gewichten nach und nach einsinken. So können Unebenheiten entstehen, die wiederum Schäden am gesamten Aufbau zur Folge haben können.

Es ist auch bekannt, aus Schienen zusammengestellte Montagedreiecke für Solarmodule mit wellblech- oder trapezblechartigen Bodenplatten zu vernieten oder zu verschrauben, die auf einem Flachdach nach einem Raster verteilt sind. Damit kann zwar eine großflächige Verteilung von Druckkräften erreicht werden, aber das Gewicht dieser Bodenplatten ist zu gering, um auch einem durch Wind oder Sturm verursachten Sog standhalten zu können, es ist eine zusätzliche Beschwerung notwendig. Die Verbindung der Montagedreiecke mit den Bodenplatten durch Vernieten ist aufwendig und arbeitsintensiv und birgt durch notwendige Bohrarbeiten auch das Risiko von Dachbeschädigungen. Häufig ist die Belastbarkeit der einzelnen Niet- oder Schraubverbindungen auch sehr begrenzt und die Nieten oder Schrauben können aus dem Plattenwerkstoff ausreißen.

Es gibt auch den Vorschlag, Montagedreiecke auf einem Flachdach aufzustellen und die jeweils die Grundseite des Dreiecks bildende Schiene mit Steinplatten zu beschweren. Damit kann verhindert werden, dass der Aufbau durch Sogwirkung angehoben und womöglich fortgetragen wird, aber das gesamte Gewicht der Steinplatten und des Aufbaus mit einer möglichen zusätzlichen Belastung z.B. durch Schnee lastet auf den schmalen Grundschienen der Montagedreiecke; die Schienen können nach und nach in den Untergrund einsinken, es kann zu Beschädigungen, z.B. Rissen im Flachdach und damit zu Undichtigkeiten mit Folgeschäden am Gebäude kommen.

Es ist auch bekannt, die Grundschienen von Montagedreiecken mit z.B. Betonsteinen zu verschrauben, die auf einem Flachdach verteilt sind. Dies hat wiederum den Nachteil, dass sowohl die Schienen als auch der Stein mit Bohrungen für die Schraubverbindung zu versehen sind. Dies ist arbeitsintensiv, verursacht Staub und Schmutz und birgt das Risiko von Dachbeschädigungen. Die Bohrungen führen auch häufig zu Rissbildungen mit sofortigem oder verzögertem Brechen der Betonsteine im Bereich der Bohrung.
Es ist auch bekannt, so genannte Montagewannen aus Kunststoff für Solarmodule auf einem Flachdach auszulegen, wobei die vordere und die hintere Wand der Wannen unterschiedlich hoch sind, um den an den Wandrändem befestigten Solarmodulen eine bestimmte Neigung zu geben. Die Montagewannen können z.B. mit Kies oder Betonsteinen befüllt und beschwert werden, damit sie einer Sogwirkung widerstehen können; Druck wird entsprechend der Bodenflächen der Wannen verteilt. Diese Maßnahmen sind aufwendig und umständlich, damit auch kosten- und materialintensiv und wenig variabel, was die Einleitung der Beschwerung in das Dach angeht. Ein besonderer Nachteil der Montagewannen ist, dass sich in den Wannen unter den darauf errichteten Solarmodulen ein Wärmestau bilden kann, der sich nachteilig auf die Wirksamkeit oder Leistung der Solarmodule auswirkt, denn die ist am besten bei eher kühlen Temperaturen, weshalb für eine ausreichende Hinterlüftung der Solarmodule gesorgt sein sollte. Belüftungslöcher, die in der Wannenwand vorgesehen werden, können nur begrenzt Abhilfe schaffen und erfordern zusätzliche Arbeitsmaßnahmen. Der Kunststoff der Montagewannen kann mit der Zeit durch die Einwirkung von UV-Licht spröde werden.

**Die** US 7 921 843 B1 **beschreibt ein Montage- und Trägerelement, das einstückig aus einem Materialstück hergestellt und mehrfach gebogen und abgewinkelt ist und dessen Breite mindestens der Breite eines Solarpaneels entspricht Es weist eine erhöhte und geneigte Befestigungsabwinklung und eine niedrige, ebenfalls geneigte Befestigungsabwinklung auf. Das Montage- und Trägerelement umfasst außerdem einen mit Gewichten beschwerbaren Trog, der einen flachen Boden und Seitenwände aufweist Von der erhöhten Befestigungsabwinklung führt ein geneigter Abschnitt des Montage- und Trägerelements zur einen Seitenwand des Troges, die andere Befestigungsabwinklung schließt unmittelbar an die zweite Seitenwand des Troges an. Montage- und Trägerelemente werden in parallelen Reihen auf einem Flachdach platziert, wobei der Boden des Troges jeweils auf dem Flachdach aufliegt Jedes Solarpaneel wird an einer seiner Kanten mit einer, z.B. der erhöhten, Befestigungsabwinklung eines Montage- und Trägerelements der einen Reihe und an seiner entgegengesetzten Kante mit der dann niedrigen Befestigungsabwinklung des Montage- und Trägerelements der benachbarten Reihe verbunden, so dass die Solarpaneele eine gewünschte, geneigte Stellung einnehmen und entsprechend in Reihen angeordnet sind. Zwischen jeder Reihe von Solarpaneelen befinden sich dann die nach oben offenen Tröge einer Reihe von Montage- und Trägerelementen, die mit Gewichten beschwert werden können, um die Anlage windsicher zu machen. Die Reihen von Solarpaneelen halten also zueinander einen Abstand, der der Breite der Tröge entspricht. Dies hat den Nachteil, dass ein erheblicher Teil der Fläche eines Flachdachs für die Gewinnung von Energie aus der Sonne ungenutzt bleibt Außerdem eignet sich dieses Montage- und Trägerelement nur für den Einsatz bei einer zu errichtenden Solaranlage; die Verwendung im Zusammenhang mit anderen Aufbauten, wie Messeständen, Messezelten und dergl. ist nicht möglich.**

Aufgabe der Erfindung ist es, eine Vorrichtung zu schaffen, mit der sich Aufbauten auf einem flachen Untergrund oder einem Untergrund mit geringer Neigung oder geringen Unebenheiten sowohl sog- und als auch drucksicher errichten lassen, ohne in den Untergrund in irgendeiner Weise eindringen zu müssen, ohne dass also eine Verankerung im Untergrund selbst, z.B. nach dem Herstellen von Bohrungen oder irgendwie gearteten Aushebungen, erfolgen muss. Die Vorrichtung soll sich insbesondere dafür eignen, Solaranlagen auf Flachdächern oder Dächern mit geringer Neigung, aber auch auf dem Erdboden und auf einem vergleichsweise weichen oder auch eher undurchdringlichen Untergrund sicher und mit einfachen Maßnahmen zu errichten. Bei der Aufständerung von Solaranlagen auf Flachdächern oder Dächern mit geringer Neigung müssen Schäden, vor allem auch Bearbeitungsschäden und nachträglich auftauchende Folgeschäden, an den Dächern unbedingt vermieden werden. Die Vorrichtung soll eine variabel anpassbare und flexible Befestigung der zu haltenden Elemente unterschiedlichster Art ermöglichen. Sie soll aus handlichen und transportfreundlichen und kostengünstigen Einzelteilen aufgebaut sein. Die Vorrichtung soll dauerhaft UV-Strahlen- und witterungsstabil sein. **Der Einsatz der Vorrichtung soll nicht auf Solaranlegen beschränkt sein, sondern sich auch für andere ganz unterschiedliche Aufbauten, wie Messeständen, Messezelten und dergl. eignen.**

Erfindungsgemäß wird dies erreicht durch eine Vorrichtung gemäß Anspruch 1 oder Anspruch 20.

Nach der Erfindung kommt eine Befestigungsschelle zur Anwendung, die aus einem dünnwandigen Materialstreifen besteht, von dem U-förmig Befestigungslaschen mit Befestigungslöchern abgewinkelt sind und auf dessen so entstehendem Boden ein oder mehrere Gewichtelemente zur Beschwerung aufgelegt sind, wobei ein zu tragender Aufbau mit seinem gesamten Gewicht auf dem oder den Gewichtelementen ruht und ein Träger dieses Aufbaus über die Befestigungslaschen mittels bekannter Befestigungsmittel festspannbar ist.

Wenn diese Vorrichtung auf eine tragende Fläche aufgelegt wird und ein tragendes Teil, z.B. ein Trägerprofil, eines Aufbaus mit ihr über die Befestigungslaschen verbunden, z.B. verschraubt oder vernietet wird, ruht der Aufbau mit seinem gesamten Gewicht auf dem in die Vorrichtung eingelegten, großflächig wirkenden Gewichtelement. Damit wird eine günstige, weil flächige Kraftverteilung über die tragende Fläche erreicht, die Druckbelastung der tragenden Fläche, auch durch zusätzliche Schneeauflage, wird im Vergleich zu bekannten Vorrichtungen, bei denen das gesamte Gewicht des Aufbaus nur auf Schienen ruht, deutlich reduziert. Im Falle einer auf einem Flachdach mit Hilfe dieser Vorrichtung aufgeständerten Solaranlage werden Beschädigungen an der Dachhaut durch einseitige und hohe Druckbelastung vermieden. Bei einem Aufbau auf einem eher weichen Untergrund, z.B. direkt auf dem Erdboden oder einer auf dem Dach ausgelegten Schutzmatte wird ein Einsinken in den Untergrund vermieden. Gleichzeitig verhindert das in die Befestigungsschelle eingelegte Gewichtelement, dass der Aufbau bei Wind oder Sturm angehoben und im schlimmsten Fall sogar fortgetragen wird.

Der Abstand der Befestigungslaschen ist vorzugsweise an die Maße des Gewichtelements derart angepasst, dass das Gewichtelement zwischen den Befestigungslaschen auf dem Boden mit seiner ganzen Auflagefläche zur Auflage kommt, so dass eine gleichmäßige und großflächige Verteilung der Druckkräfte erreicht wird. Insbesondere der Boden der Befestigungsschelle ist dünnwandig ausgebildet, damit das Gewichtelement über seine gesamte Auflagefläche gut auf dem Untergrund aufliegen kann.

Nach einer Ausführungsform der Erfindung ist der Materialstreifen der Befestigungsschelle U-förmig gebogen und von den an den beiden Schmalseiten vom Boden hochragenden U-Schenkeln sind die Befestigungslaschen nach außen abgewinkelt. Der Abstand der Befestigungslaschen kann dann so an die Abmessungen des Gewichtelements angepasst sein, dass bei einer Sogwirkung auf den zu tragenden Aufbau die Befestigungsschelle vorteilhaft mit dem Gewichtelement zusätzlich verspannt und die Wirksamkeit der Verspannung verstärkt wird.

Wenn bei dieser Ausführungsform das in die Befestigungsschelle eingelegte Gewichtelement in seiner Höhe über die U-Schenkel hinausragt, ist gewährleistet, dass ein zu tragender Aufbau mit seinem gesamten Gewicht auf den Gewichtelementen mehrerer solcher Vorrichtungen ruht und eine gleichmäßige und großflächige Verteilung der Druckkräfte erfolgt.

Wenn die U-Schenkel der Befestigungsschelle in Bezug auf ihren Boden leicht ausgestellt sind, können die Befestigungsschellen für den Transport und die Lagerung vorteilhaft und platzsparend gestapelt werden.

Wenn ein Teil der U-Schenkel der Befestigungsschelle seitlich ausgebogen ist und diese ausgebogenen Teile als Befestigungslaschen mit den Befestigungslöchern versehen sind, sind die Befestigungslaschen und ihre Befestigungslöcher von der Seite zugänglich, was die Montagearbeit beim Verbinden der Befestigungsschelle mit dem Träger eines Aufbaus, abhängig vom Profil des Trägers, sehr vereinfachen und erleichtern kann.

Nach einer anderen Ausführungsform der Erfindung sind an beiden Längsseiten des den Boden der Befestigungsschelle bildenden Materialstreifens in einem der Abmessung des Gewichtelements angepassten Abstand je ein Paar sich gegenüberstehender Befestigungslaschen mit Befestigungslöchern senkrecht nach oben abgewinkelt, und diese Befestigungslaschen ragen hier in ihrer Höhe über ein in die Befestigungsschelle eingelegtes Gewichtelement hinaus, und ein auf das Gewichtelement und zwischen die Befestigungslaschen gelegter Träger eines zu tragenden Aufbaus kann zwischen den Befestigungslaschen mittels bekannter Befestigungsmittel eingespannt werden.
Nach einer Abwandlung dieser Ausführungsform kann an den beiden einander gegenüber liegenden Längsseiten des den Boden der Befestigungsschelle bildenden Materialstreifens in einem der Abmessung des Gewichtselements angepassten Abstand je eine Befestigungslasche mit Befestigungslöchern rechtwinklig nach oben abgewinkelt sein, und diese Befestigungslaschen ragen in ihrer Höhe über ein in die Befestigungsschelle eingelegtes Gewichtelement hinaus, und ein auf das Gewichtelement und zwischen die Befestigungslaschen gelegter Träger eines zu tragenden Aufbaus kann zwischen den Befestigungslaschen mittels bekannter Befestigungsmittel eingespannt werden.

Bei diesen beiden letztgenannten Ausführungsformen kann die Befestigungsschelle kostensparend zunächst in einem einfachen Arbeitsgang als flacher Rohling ausgestanzt werden. Die flachen Rohlinge können platzsparend für den Transport und die Lagerhaltung gestapelt werden, und die Befestigungslaschen können dann unmittelbar vor der Verwendung abgewinkelt werden. Ein weiterer Vorteil dieser Ausführungsformen ist, dass die Befestigungslöcher der Befestigungslaschen seitlich zugänglich sind, was die Montagearbeiten sehr erleichtert.

Bei der letztgenannten Abwandlung der Ausführungsform kann das Ausstanzen der Rohlinge auch in besonders materialsparender Weise erfolgen.

Wenn in den Befestigungslaschen mehrere Befestigungslöcher zueinander versetzt vorgesehen sind und die Befestigungslöcher zweier sich gegenüberstehender Befestigungslaschen miteinander korrespondieren, können bei der Montage gewisse Toleranzen und Maßabweichungen am Gewichtelement oder am Träger des zu tragenden Aufbaus ausgeglichen werden, indem ein passendes Paar Befestigungslöcher für das Verspannen gewählt wird.

Bevorzugtes Material für die Befestigungsschelle ist Edelstahl oder Aluminium, da damit Korrosionsfestigkeit und eine lange Lebensdauer erreicht wird und ein Ausreißen an den Verbindungsstellen vermieden wird. Ein geeigneter Kunststoff kann, wenn gewünscht, aber ebenfalls zur Anwendung kommen.

Vorteilhaft kann die Befestigungsschelle auch aus einem vorgefertigten, im Handel erhältlichen Lochband oder Lochblech geformt sein. Dies senkt die Herstellungskosten auch weil die im Lochband schon vorhandenen Löcher als Befestigungslöcher genutzt werden können und diese nicht in einem besonderen Arbeitgang hergestellt werden müssen.

Als Gewichtelement im Sinne der Erfindung kann praktisch alles eingesetzt werden, was zur Beschwerung der Befestigungsschelle geeignet ist. Besonders geeignet sind in sich stabile Elemente, die eine Druckbelastung flächig verteilt weiterleiten.

Das Gewichtelement kann vorteilhaft z.B. aus einem im Baustoffhandel erhältlichen Standard-Stein bestehen. Es kann aber auch aus einer in die Befestigungsschelle eingelegten Trapezplatte bestehen, deren Trapezfurchen mit Kies oder Steinen oder auch Schrott befüllt sind, und es kann aus einem wannenförmigen Teil bestehen, das ebenfalls mit Kies oder Steinen befüllt ist. Die Seitenränder eines solchen wannenförmigen Teils können dann bevorzugt nach innen abgekantet sein, um den Seitenrändern eine gute Stabilität bei Druckbelastung zu geben.

Die Befestigungsschelle kann auch einstückig mit dem Gewicht ausgebildet sein, indem die Befestigungsschelle wannenförmig verlängert und mit Kies oder Steinen befüllt ist.

Der Boden der wannenförmig verlängerten Befestigungsschelle kann als Trapezplatte ausgebildet sein, wobei dann die Trapezfurchen mit Kies oder Steinen befüllt sind; dabei können die Trapezberge entlang der beiden Längskanten dieser Befestigungsschelle als Befestigungslaschen ausgebildet sein.

Nach einer anderen Ausführungsform der Erfindung kann die Befestigungsschelle zweigeteilt sein und aus zwei dünnwandigen und schmalen, parallel angeordneten Materialstreifen bestehen, an deren insgesamt vier Enden jeweils eine Befestigungslasche rechtwinklig hochgebogen ist, und die freien Enden der vier Befestigungslaschen können dann zu Befestigungsösen gebogen sein. Die Abschnitte der Materialstreifen zwischen den Befestigungslaschen bilden dann gemeinsam den Boden der Befestigungsschelle, dessen Länge an die Maße von Gewichtelementen angepasst ist. Diese Ausführungsform ist besonders materialsparend und kostengünstig in der Herstellung.

Um die Handhabung der letztgenannten Ausführungsform bei ihrem Einsatz zu erleichtern und zu vereinfachen, können die den Boden der Befestigungsschelle bildenden Abschnitte der Materialstreifen miteinander gekreuzt sind und an dem Kreuzungspunkt zusätzlich fest miteinander verbunden sein. Eine leichtere Handhabung dieser Ausführungsform beim Einsatz kann auch erreicht werden, indem die beiden parallel angeordneten Materialstreifen der Befestigungsschelle an den Stoßstellen der den Boden der Befestigungsschelle bildenden Abschnitte und der rechtwinklig abgebogenen Befestigungslaschen durch Drahtschlingen miteinander verbunden und auf einem durch die Länge der Drahtschlingen wählbaren Abstand gehalten werden.

Die Befestigungsschelle kann auch aus einem einzigen dünnwandigen und schmalen Materialstreifen bestehen, der auf seiner halben Länge vierfach rechtwinklig bzw. in entgegengesetzter Richtung zweifach rechtwinklig abgebogen ist, so dass eine nach oben stehende Befestigungslasche in Form eines nach unten offenen Rechtecks entsteht, von der den Boden der Befestigungsschelle bildende Abschnitte rechtwinklig abragen, wobei an den beiden Enden des Materialstreifens je eine Befestigungslasche rechtwinklig nach oben abgebogen ist; die freien Enden dieser beiden Befestigungslaschen können wiederum zu Befestigungsösen gebogen sein. Diese Ausführungsform ist ebenfalls sehr materialsparend, dabei einteilig ausgeführt, so dass die Handhabung beim Einsatz einfach ist.

Bei den zuletzt genannten Ausführungsformen können der oder die Materialstreifen, aus denen die Befestigungsschelle besteht, so schmal gewählt werden, dass sie drahtförmig sind.

Wenn die freien Enden der Befestigungslaschen schraubenförmig mehrfach zu Befestigungsösen gebogen sind, können beim Befestigen der Befestigungsschelle über einem Träger mit Hilfe von Schrauben die Windungen der Befestigungsösen in den Schraubengang der Schrauben eingreifen, was die Sicherheit der Verbindung erhöht.

Wenn die Befestigungslaschen über einen auf dem Gewichtelement aufgelegten Träger ausreichend hinausragen, kann die Befestigung der Befestigungsschelle am Träger auch vorgenommen werden, indem die Befestigungslaschen über dem Träger miteinander fest verbunden und verspannt werden.

Die Erfindung wird im Folgenden anhand der anhängenden Zeichnungen beispielhaft näher beschrieben; es zeigen
Fig. 1 Einzelteile einer Ausführungsform der Erfindung in Seitenansicht
Fig. 2 die Vorrichtung gemäß Fig. 1 in montiertem Zustand,
Fig. 3 eine perspektivische Darstellung der Vorrichtung gemäß Fig. 2,
Fig. 4 eine Abwandlung eines wesentlichen Bauteils der Vorrichtung nach Fig. 1 in Seitenansicht,
Fig. 5 Einzelteile einer zweiten Ausführungsform der Erfindung in Seitenansicht,
Fig. 6 die Vorrichtung nach Fig. 5 in montiertem Zustand,
Fig. 7 eine perspektivische Darstellung der Vorrichtung gemäß Fig. 5,
Fig. 8 Einzelteile einer weiteren Ausführungsform der Erfindung in Seitenansicht,
Fig. 9 die Ausführungsform gemäß Fig. 8 in montiertem Zustand,
Fig. 10 Einzelteile einer weiteren Ausführungsform der Erfindung in perspektivischer Ansicht,
Fig. 11 eine Seitenansicht der Ausführungsform gemäß Fig. 10 in montiertem Zustand,
Fig. 12 eine Seitenansicht einer Fortbildung der Ausführungsform gemäß Fig. 10 in montiertem Zustand,
Fig. 13 die Seitenansicht der Ausführungsform gemäß Fig. 12 in Richtung des Pfeiles A in Fig. 12,
Fig. 14 einen vergrößerten Ausschnitt aus Fig. 13,
Fig. 15 Einzelteile einer weiteren Fortbildung der Ausführungsform gemäß Fig. 10,
Fig. 16 bis Fig. 18 Rohlinge zur Herstellung eines wesentlichen Bauteils der Ausführungsform gemäß Fig. 15,
Fig. 19 Einzelteile einer Abwandlung der Ausführungsform gemäß Fig. 10,
Fig. 20 Rohlinge zur Herstellung eines wesentlichen Bauteils der Ausführungsform gemäß Fig. 19
Fig. 21 bis Fig. 24 weitere Ausführungsformen der Erfindung, die besonders materialsparend sind.

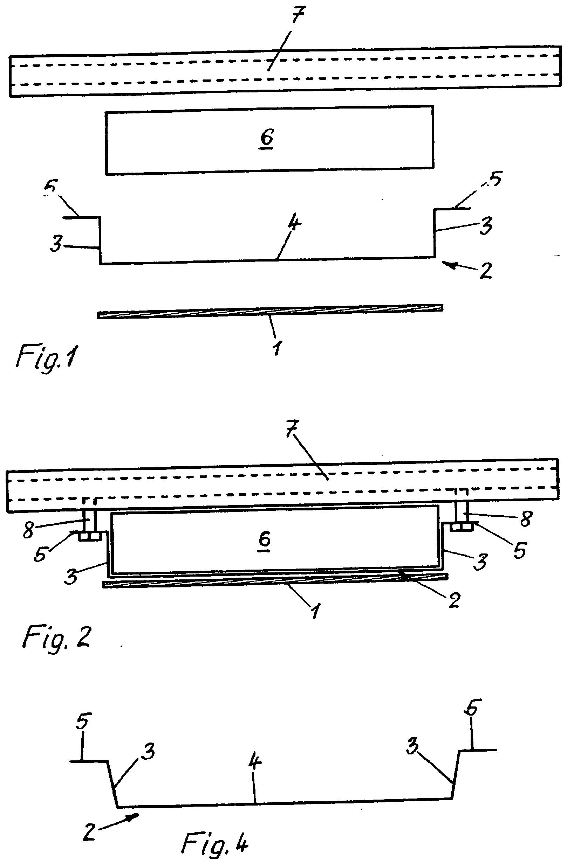

In Fig. 1 ist mit der Bezugszahl 1 eine tragende Fläche oder ein Untergrund bezeichnet, auf dem ein Aufbau, z.B. eine Solaranlage, errichtet werden soll. Die Bezugszahl 2 weist auf ein wesentliches Bauteil der erfindungsgemäßen Vorrichtung. Es besteht hier aus einem U-förmig geformten, dünnwandigen Materialstreifen 2 aus Metall oder Kunststoff, von dessen U-Schenkeln 3 parallel zum Boden 4 verlaufende Befestigungslaschen 5 abgewinkelt sind; im Folgenden wird dieses Bauteil als Befestigungsschelle 2 bezeichnet. Auf den Boden 4 der Befestigungsschelle 2 wird ein Gewichtelement 6 aufgelegt, das bevorzugt aus einem Standard-Betonstein bestehen kann, wie er als genormtes Teil im Baustoffhandel erhältlich ist. Jede andere Art von Gewicht ist aber ebenfalls anwendbar. Mit der Bezugszahl 7 ist beispielhaft ein Träger bezeichnet, der zu einem auf dem Untergrund 1 bzw. der tragenden Fläche 1 zu errichtenden Aufbau gehören soll. Die Befestigungsschelle 2 ist vorteilhaft an die Maße des Gewichtelements 6 so angepasst, dass sie am Gewichtelement 6 eng anliegt. Wie deutlicher aus Fig. 2 zu ersehen ist, ragt das in die Befestigungsschelle 2 eingelegte Gewichtelement 6 in seiner Höhe über die U-Schenkel 3 um ein gewisses Maß hinaus. Wenn der Träger 7 mit Schrauben 8 oder Nieten in Befestigungslöchern 9 der Befestigungslaschen 5 der Befestigungsschelle 2 verbunden wird, ruht der Träger 7 mit seinem und dem Gewicht des gesamten von ihm getragenen Aufbaus auf dem Gewichtelement 6 der Vorrichtung, und das Gewichtelement 6 seinerseits ruht sicher auf der tragenden Fläche 1. Das Gewichtelement 6 verhindert, dass der Träger 7 mitsamt dem zugehörigen Aufbau bei einem auftretenden Sog angehoben und im schlimmsten Fall sogar weggetragen wird. Diese Wirkung wird unterstützt, indem durch die Sogwirkung die Befestigungsschelle 2 am Gewichtelement 6 zusätzlich verspannt wird. Da die Befestigungsschelle 2 und besonders ihr Boden 4, der sich zwischen dem Gewichtelement 6 und der tragenden Fläche 1 befindet, dünnwandig ausgebildet sind, ruht das Gewichtelement 6 praktisch mit seiner gesamten Auflagefläche auf dem Untergrund 1 bzw. der tragenden Fläche 1 und das besonders, wenn es sich um einen eher weichen Untergrund 1 handelt, wenn z.B. der Aufbau auf dem Erdboden errichtet werden soll oder wenn ein Flachdach, auf dem z.B. eine Solaranlage aufgeständert werden soll, mit einem Schutzvlies oder einer anderen Schutzmatte ausgelegt ist. Damit wird das Gewicht des gesamten Aufbaus großflächig und gleichmäßig über den Untergrund 1 oder die tragende Fläche 1 verteilt, so dass Beschädigungen, z.B. Risse an einem Flachdach, durch zu starke Druckbelastung vermieden werden.

Fig. 4 zeigt eine Abwandlung der Befestigungsschelle 2. Die U-Schenkel 3 stehen hier nicht rechtwinklig zum Boden 4, sondern sind leicht ausgestellt, so dass sich statt der reinen U-Form eine Trapezform der Befestigungsschelle 2 ergibt. Dies macht die Befestigungsschelle 2 für den Transport und die Vorratshaltung raumsparend stapelbar.

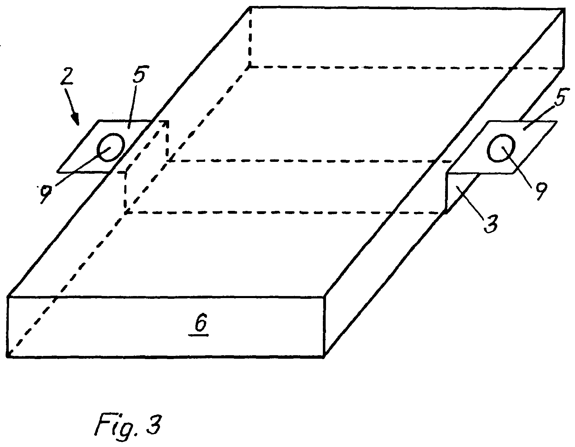

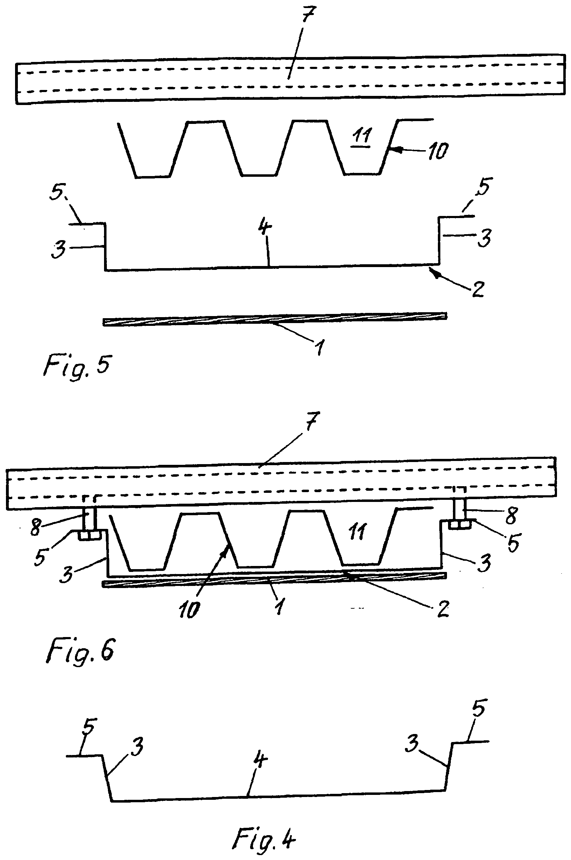

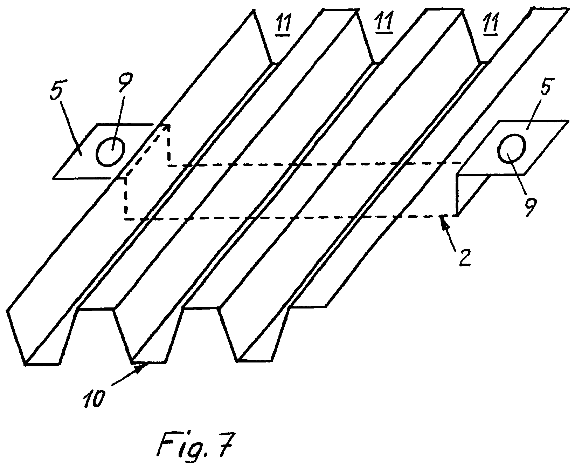

Gemäß Fig. 5 bis Fig. 7 ist bei einem ansonsten gleichen Aufbau der Vorrichtung wie gemäß Fig. 1 bis Fig. 3 als Gewichtelement 6 statt eines (Standard-) Steines eine Trapezplatte 10 in die Befestigungsschelle 2 eingelegt. Zur Beschwerung können in die Trapezfurchen 11 Kies oder Steine oder anderes für eine Beschwerung geeignetes Material eingeschüttet werden. Über die Auflageflächen der Trapezfurchen 11 ergibt sich hier ebenfalls eine gute Kräfteverteilung auf der tragenden Fläche 1. Gegen eine Sogwirkung ist ein Aufbau in derselben Weise geschützt, wie bei der oben beschriebenen ersten Ausführungsform der Erfindung gemäß Fig. 1 bis Fig. 3.

Nach einer anderen Ausführungsform der Erfindung (nicht dargestellt) kann als Gewichtelement 6 eine Blech- oder Kunststoffwanne in die Befestigungsschelle 2 eingelegt werden, die ebenfalls mit Steinen oder Kies oder einem sonstigen geeigneten Material befüllt wird. Entlang der Längskanten der Wanne können die Ränder nach innen umgebördelt sein oder auch nach außen gekantet sein. Die nach außen gekanteten Ränder können auf den Befestigungslaschen 5 der Befestigungsschelle 2 aufliegen und entsprechend mit Befestigungslöchern versehen sein, die für die Verbindung mit einem Träger eines zu errichtenden Aufbaus mit den Befestigungslöchern 9 der Befestigungsschelle 2 zur Deckung gebracht werden.

Eine weitere Variante kann sein, die Befestigungsschelle 2 nicht als vergleichsweise schmalen Streifen sondern selbst lang gestreckt und wannenförmig oder als lang gestreckte Trapezplatte auszubilden und mit Kies oder Steinen oder einem anderen geeigneten Material zu befüllen und zu beschweren. Die Ränder der wannenförmigen Befestigungsschelle 2 können nach außen gekantet sein und für die Verschraubung oder Vernietung mit den Befestigungslöchern 9 der Befestigungsschelle 2 versehen sein. Im Falle einer Trapezplatte als Befestigungsschelle 2 können die Trapezberge entlang der beiden Längsseiten als Befestigungslaschen mit Befestigungslöchern ausgebildet sein.

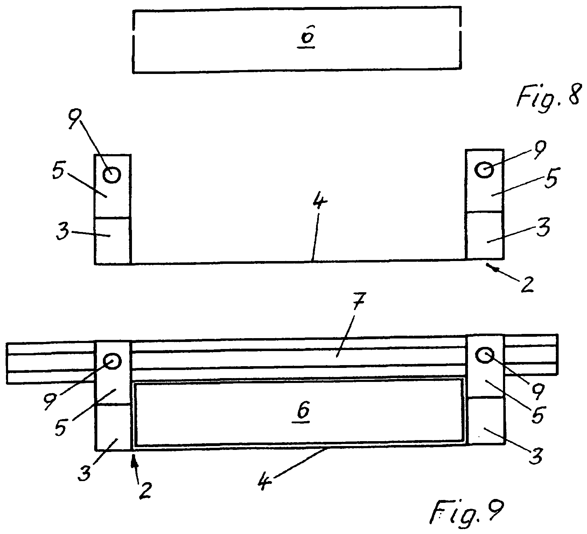

Nach den oben beschriebenen Ausführungsformen der Befestigungsschelle 2 sind die Befestigungslöcher 9 für das Verschrauben oder Vernieten mit einem Träger 7 eines Aufbaus von unten und auch von oben zugänglich; wie die Verschraubung vorgenommen wird, kann vom Profil des Trägers 7 abhängig gemacht werden. Die Fig. 8 und 9 zeigen eine weitere Variante der Befestigungsschelle 2. Ein Teil der U-Schenkel 3 ist hier seitlich ausgebogen, und diese seitlich ausgebogenen Teile sind als Befestigungslaschen 5 mit den Befestigungslöchern 9 versehen. Dies hat den Vorteil, dass die Befestigungslöcher 9 seitlich zugänglich sind, was bei entsprechendem Profil des Trägers 7 die Montagearbeit vereinfachen und erleichtern kann.

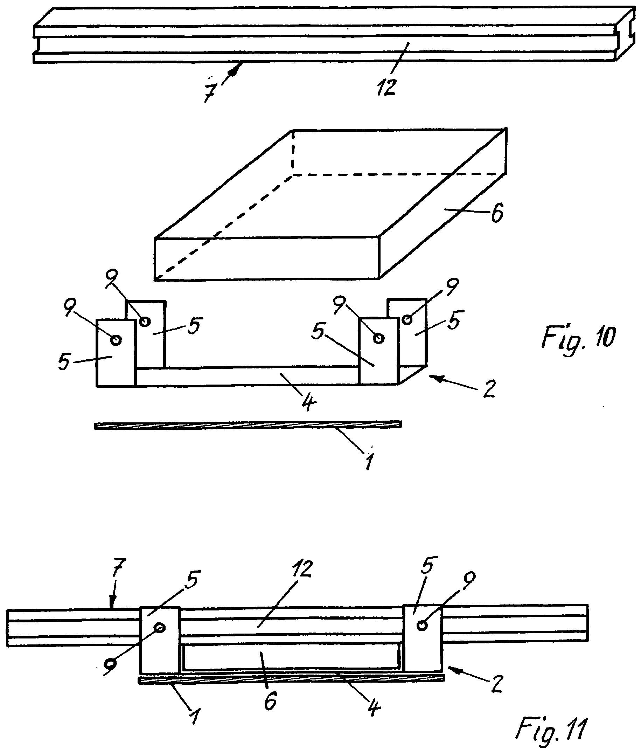

Fig. 10 zeigt die Einzelteile einer weiteren Ausführungsform der erfindungsgemäßen Vorrichtung. Die Befestigungsschelle 2 besteht hier aus einem einfachen, dünnwandigen Materialstreifen, der den Boden 4 der Befestigungsschelle 2 bildet. An beiden Enden dieses Streifens sind an beiden Längsseiten Befestigungslaschen 5 so abgewinkelt, dass sie zusammen mit dem Boden 4 jeweils eine U-Form bilden. Im Abstand zum Boden 4 sind Befestigungslöcher 9 in den Befestigungslaschen 5 vorgesehen. An jedem Ende des Bodens 4 befindet sich also ein Paar sich gegenüber stehender Befestigungslaschen 5. Wenn ein Gewichtelement 6, wie vorgesehen, zwischen den beiden Paaren von Befestigungslaschen 5 auf den Boden 4 der Befestigungsschelle 2 eingelegt wird, siehe dazu Fig. 11, so ragen in diesem Fall die Befestigungslaschen 5 soweit über das Gewichtelement 6 hinaus, dass ein Träger 7 zwischen die sich gegenüber stehenden Befestigungslaschen 5 geschoben werden und auf dem Gewichtelement 6 zur Auflage kommen kann. Wenn der Träger 7 seitliche Nuten 12 aufweist, so sollen sich die Befestigungslöcher 9 auf der Höhe der Nuten 12 befinden, so dass der Träger 7 mittels Schrauben, die durch die Befestigungslöcher 9 hindurch in die Nuten 12 eingreifen, festgespannt werden kann.

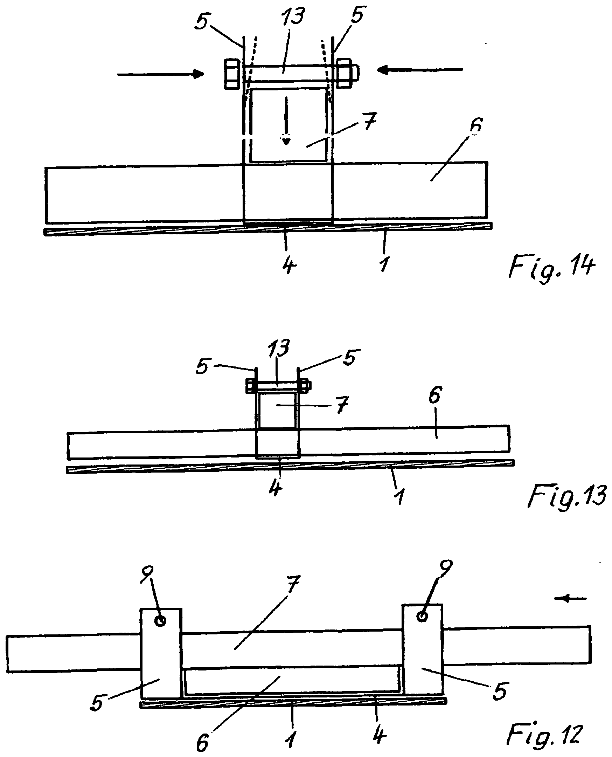

Fig. 13 zeigt die Befestigungsschelle 2 gemäß Fig. 10 für den Fall, dass als Träger 7 ein Standardprofil ohne Nut, z.B. ein Standard-Vierkantprofil, zur Anwendung kommen soll. Die Befestigungslaschen 5 ragen dann noch über den Träger 7 soweit hinaus, dass sich die Befestigungslöcher 9 über dem Träger 7 befinden und der Träger 7 mittels Schrauben13, die durch die Befestigungslöcher 9 zweier sich gegenüber stehender Befestigungslaschen 5 hindurchgehen, eingespannt werden kann, wie es in der Ansicht gemäß Fig. 13 verdeutlicht ist. Fig. 14 zeigt vergrößert einen Ausschnitt aus Fig. 13, der veranschaulicht, wie durch Anziehen der Schrauben 13 die Befestigungslaschen 5 leicht einwärts gebogen werden können und der Träger 7 festgespannt werden kann.

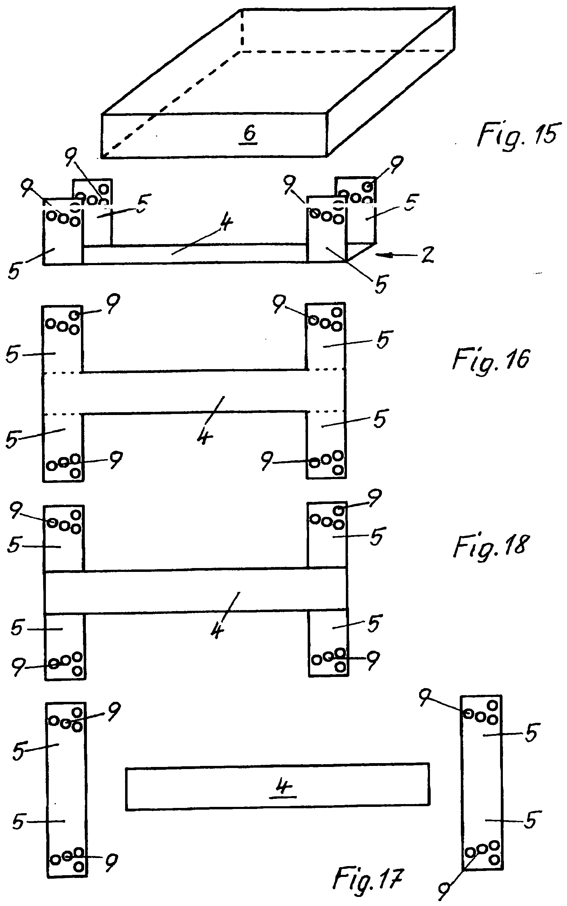

Fig. 15 zeigt voneinander noch getrennt Befestigungsschelle 2 und Gewichtelement 6 einer weiteren Fortbildung der Ausführungsform nach Fig. 10 bzw. Fig. 12. Wenn das Gewichtelement 6, wie oben beschrieben, zwischen die beiden Paare von Befestigungslaschen 5 in die Befestigungsschelle 2 eingelegt wird, so ragen auch in diesem Fall die Befestigungslaschen 5 über das Gewichtelement soweit hinaus, dass ein auf dem Gewichtelement aufliegender Träger 7 mittels Schrauben zwischen den Befestigungslaschen 5 eingespannt werden kann. Um Toleranzen oder Maßabweichungen am Gewichtelement 6 oder am Träger 7 ausgleichen zu können, sind in den Befestigungslaschen 5 mehrere Befestigungslöcher 9 zueinander versetzt angeordnet, die für das Verspannen den Abmessungen von Gewichtelement 6 und Träger 7 entsprechend gewählt werden können.

Fig. 16 bis Fig. 18 zeigen, wie Befestigungsschellen 2 nach Fig. 15 aber auch nach Fig. 10 und Fig. 12 einfach und kostengünstig hergestellt werden können.

Die Befestigungsschellen 2 können gemäß Fig. 16 einteilig als flacher Rohling ausgestanzt werden, wonach die Befestigungslaschen 5 entsprechend abgewinkelt werden. Als nachteilig bei diesem Verfahren könnte der dabei anfallende Verschnitt angesehen werden. Um beim Stanzen Materialabfall zu vermeiden, können Boden 4 und Befestigungslaschen 5 gemäß Fig. 17 auch als getrennte Teile ausgestanzt und danach zu einem Rohling gemäß Fig. 18 verbunden werden. Rohlinge gemäß Fig. 16 oder Fig. 18 können für einen platzsparenden Transport und eine platzsparende Lagerhaltung vorteilhaft zunächst in ihrer flachen Form belassen werden; für die Verarbeitung können dann die Befestigungslaschen 5 vor Ort U-förmig nach oben abgewinkelt werden.

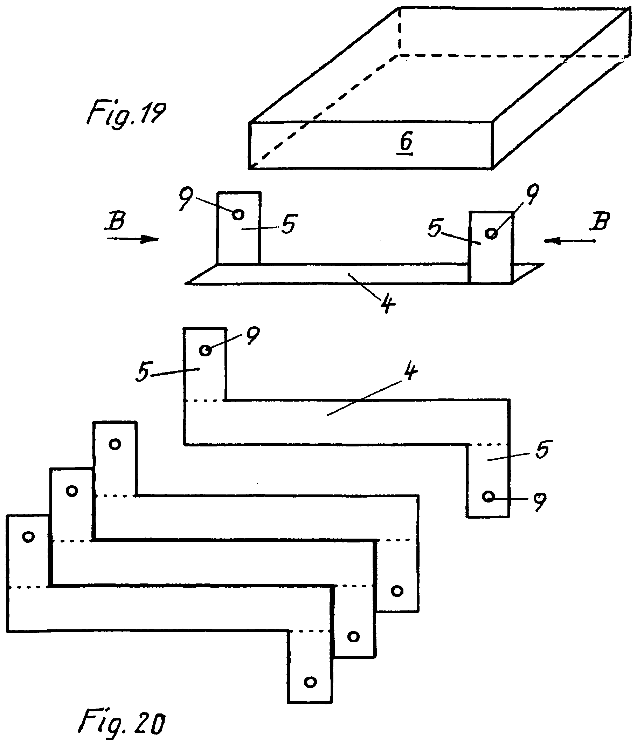

Fig. 19 zeigt eine Abwandlung der Ausführungsform nach Fig. 10 bzw. Fig. 12; Fig. 20 zeigt Rohlinge zur Herstellung der Befestigungsschelle 2 gemäß Fig. 19. Die Befestigungsschelle 2 gemäß Fig. 19 besteht aus einem dünnwandigen Materialstreifen, der den Boden 4 der Befestigungsschelle 2 bildet. An beiden Enden dieses Materialstreifens oder Bodens 4 ragt an den einander gegenüber liegenden Längsseiten jeweils eine Befestigungslasche 5 mit einem Befestigungsloch 9 oder mit mehreren Befestigungslöchern 9 senkrecht nach oben; in Ansicht einer der Pfeile B ergibt sich somit wieder eine von Boden 4 und Befestigungslaschen 5 gebildete U-Form. Wird ein Gewichtelement 6 zwischen den beiden Befestigungslaschen 5 auf den Boden 4 aufgelegt, so ragen beide Befestigungslaschen 5 mit ihren Befestigungslöchern 9 über des Gewichtelement 6 hinaus und ein auf das Gewichtelement 6 aufgelegter Träger 7 (in Fig. 19 nicht dargestellt) kann mittels Schrauben festgespannt werden. Der Träger 7 weist in diesem Fall bevorzugt beidseitig eine Nut 12 auf (siehe Fig. 11), in die die Schrauben eingreifen können. Die Rohlinge gemäß Fig. 20 für diese Befestigungsschelle 2 lassen sich kostengünstig und materialsparend, d.h. ohne nennenswerten Verschnitt, in einem einfachen Stanzvorgang herstellen. Für den Transport und die Vorratshaltung können auch diese Rohlinge zunächst in ihrer flachen Form belassen werden und vor der Verwendung die Befestigungslaschen 5 entsprechend abgewinkelt werden.

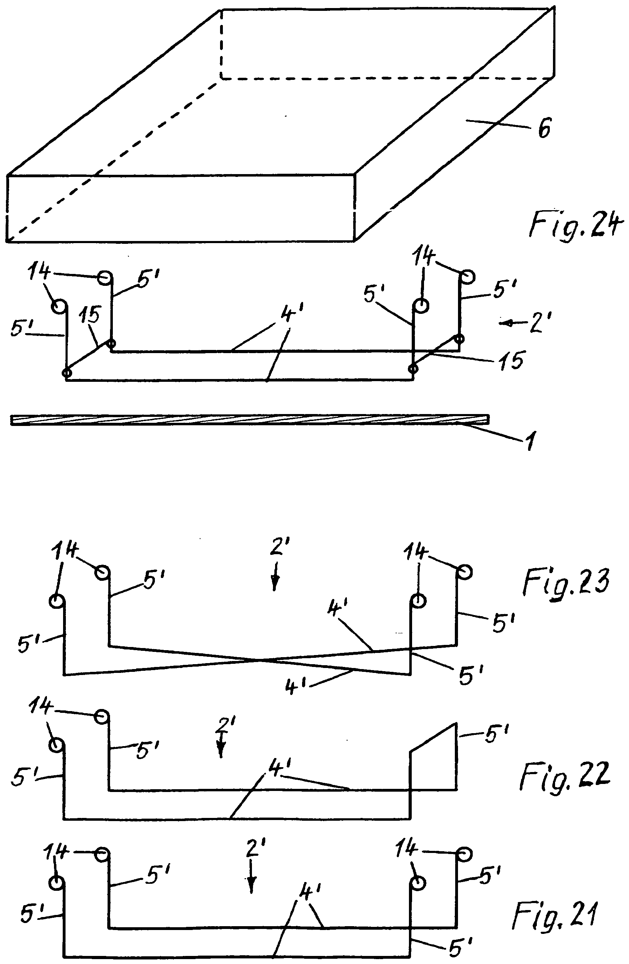

Die Fig. 21 bis 24 zeigen Ausführungsformen der erfindungsgemäßen Befestigungsschelle, deren Herstellung besonders materialsparend ist.

Gemäß Fig. 21 ist die Befestigungsschelle 2' mit Boden 4' und Befestigungslaschen 5' nicht mehr einteilig ausgeformt, sondern der Materialstreifen, aus dem sie gebildet wird, ist zweigeteilt bzw. die Befestigungsschelle 2' besteht aus zwei, dünnwandigen und sehr schmalen, im dargestellten Beispiel sogar nur noch drahtförmigen, zueinander parallel angeordneten Materialstreifen, die gemeinsam den Boden 4' als Auflagefläche für ein Gewichtelement 6 bilden und von deren Enden die Befestigungslaschen 5' U-förmig nach oben abgebogen sind. Die Enden der Befestigungslaschen 5' sind zu Befestigungsösen 14 gebogen, die entsprechend den Befestigungslöchern 9 der oben beschriebenen Ausführungsformen der Befestigung z.B. eines Trägers 7 (hier nicht dargestellt) dienen. Die Befestigungsösen 14 können einfach gebogen oder auch schraubenförmig mehrfach gebogen sein. Das Festspannen eines Trägers 7 erfolgt entsprechend mit Hilfe von Schrauben 13 (siehe oben), die einander gegenüberliegende Befestigungsösen 14 von Befestigungslaschen 5' durchdringen und mit Hilfe einer Mutter festgezogen werden. Wenn die Befestigungsösen 14 dabei mehrfach schraubenförmig gebogen sind, können die einzelnen Windungen in den Schraubengang der Schrauben eingreifen, was die Sicherheit der Verbindung erhöht.

Alternativ ist das Verbinden der Befestigungsösen 14 auch durch einen Stift oder Klipp möglich. Wenn die Befestigungslaschen 5' entsprechend länger ausgeführt werden, können diese auch über einem Träger 7 oder einem Trägerprofil 7 direkt zusammengeführt und z.B. durch Verdrillen miteinander verbunden und verspannt werden.

Fig. 22 zeigt eine Ausführungsform der Erfindung, bei der die Befestigungsschelle 2' aus einem einzigen dünnwandigen und sehr schmalen, im dargestellten Beispiel drahtförmigen Materialstreifen besteht, der mehrfach rechtwinklig abgebogen ist. Auf seiner halben Länge ist der Materialstreifen bzw. der Draht vierfach rechtwinklig bzw. in entgegengesetzter Richtung zweifach abgebogen, so dass eine senkrecht nach oben stehendes nach unten offenes Rechteck gebildet wird. Von den unteren Ecken dieser Befestigungslasche 5' ragen rechtwinklig, horizontal und zueinander parallel zwei Abschnitte des Materialstreifens 2' oder Drahtes ab, die gemeinsam den Boden 4' der Befestigungsschelle 2' bilden. Die Länge der den Boden 4' bildenden Abschnitte ist an die Maße eines Gewichtselements 6 angepasst und die beiden überstehenden Enden des Materialstreifens sind von den den Boden 4' der Befestigungsschelle 2' bildenden Abschnitten senkrecht nach oben abgewinkelt und bilden so zwei weitere Befestigungslaschen 5'. Die freien Enden dieser Befestigungslaschen 5' sind wiederum zu Befestigungsösen 14 gebogen.

Fig. 23 zeigt eine Abwandlung der Ausführungsform nach Fig. 21. Die beiden sehr schmalen, drahtförmigen Materialstreifen, aus denen die Befestigungsschelle 2' besteht, sind in dem Bereich der den Boden 4' der Befestigungsschelle 2' bildet, gekreuzt. Am Kreuzungspunkt können die Materialstreifen fest miteinander verbunden sein. Dadurch wird die Handhabung der Befestigungsschelle 2' an sich erleichtert.

Fig. 24 zeigt eine weitere Fortbildung der Ausführungsform nach Fig. 21. Um die Handhabung der aus zwei dünnwandigen und sehr schmalen, z.B. drahtförmigen Materialstreifen bestehenden Befestigungsschelle 2' bei ihrem Einsatz zu erleichtern, sind die beiden Materialstreifen im Stoßbereich der Befestigungslaschen 5' und der den Boden 4' bildenden Abschnitte der Materialstreifen durch Drahtschlingen 15 miteinander verbunden. Die Materialstreifen werden so einerseits wieder zu einem handhabbaren Bauteil verbunden, andererseits können die beiden Materialstreifen mit Hilfe der Drahtschlingen 15 auf einem bestimmten, durch die Länge der Drahtschlingen 15 frei wählbaren Abstand gehalten werden.

Auch die Befestigungsschellen 2' nach den Fig. 21 bis 24 werden bei ihrem Einsatz, wie oben beschrieben, auf eine tragende Fläche oder einen tragenden Untergrund aufgelegt und mit einem Gewichtselement 6 beschwert, das zwischen den Befestigungslaschen 5' auf dem hier von zwei schmalen Materialstreifen gebildeten Boden 4' zur Auflage kommt. Mit Schrauben, die jeweils zwei einander gegenüber stehende Befestigungsösen 14 der Befestigungslaschen 5' durchdringen und in bekannter Weise mit Hilfe von Muttern festgezogen werden, wird das Gewichtelement 6 verspannt.

Die erfindungsgemäße Vorrichtung ist geeignet, um sowohl temporär als auch dauerhaft genutzte Aufbauten auf einem flachen Untergrund oder einem Untergrund mit geringer Neigung oder einem Untergrund mit geringen Unebenheiten ohne Durchdringen der Dachhaut oder Endringen in den Untergrund sicher sowohl gegen Druck- als auch Sogbelastungen, also wind- und schneesicher, zu errichten und dabei eine günstige Kraftverteilung auf der tragenden Fläche zu erreichen. Bei temporär genutzten Aufbauten, z.B. Messezelten, Messeständen, Absperrelementen und dergleichen, lässt sich nach der Nutzung die Vorrichtung in einfachster Weise und ohne Spuren zu hinterlassen, wieder abbauen.

Bei auf einem Flachdach aufgebauten Solaranlagen bleiben bis heute die Flächen zwischen den Modulreihen für die Gewichtsverteilung ungenutzt. Die der Beschwerung dienenden Elemente werden meist nur unmittelbar im Bereich der Module, meistens unter den Modulen, platziert. Vorrichtungen nach der Erfindung können auf der gesamten Fläche eines Flachdaches, d.h. auch zwischen den Modulreihen und unter quer zu den Modulreihen auf dem Dach verlaufenden Trägerprofilen der Module, nach einem beliebigen Raster angeordnet werden, so dass die auf dem Dach lastende Kraft noch großflächiger verteilt und die Druckbelastung reduziert wird. Ebenso kann durch die in jeder seitlichen Richtung flexible Positionierung der Befestigungsvorrichtung auf vorhandene, unbewegliche und hinderliche Aufbauten Rücksicht genommen werden, z.B. Lüftungs- oder Bewässerungsöffnungen im Dachbereich.

Bevorzugtes Material für die Befestigungsschelle 2 ist Edelstahl oder Aluminium. Zur Herstellung der streifenförmigen Befestigungsschelle 2 kann industriell hergestelltes Material, z.B. ein Lochband oder ein Lochblech aus Edelstahl oder Aluminium oder ein Metalldraht, verwendet werden, indem es entsprechend gebogen wird. In einem solchen Lochband oder Lochblech wären die Befestigungslöcher 9 vorteilhaft bereits vorgefertigt.

### Bezugszeichenliste

- 1: tragende Fläche, Untergrund
- 2, 2': Befestigungsschelle, Materialstreifen
- 3: U-Schenkel
- 4, 4': Boden
- 5, 5': Befestigungslaschen
- 6: Gewichtelement
- 7: Träger
- 8: Schrauben
- 9: Befestigungslöcher
- 10: Trapezplatte
- 11: Trapezfurchen
- 12: Nut
- 13: Schrauben
- 14: Befestigungsösen
- 15: Drahtschlingen

## Patentansprüche

1. Vorrichtung für die Montage von Aufbauten auf flachem Untergrund oder einer flachen Ebene oder einem Untergrund oder einer Ebene mit geringer Neigung oder mit geringen Unebenheiten, **mit einem oder mehreren Gewichtelementen (6)** zur Positionssicherung wobei die Aufbauten von einem **Träger (7)** getragen sind, **gekennzeichnet durch** eine Befestigungsschelle (2), die aus einem dünnwandigen Materialstreifen besteht, von dem U-förmig Befestigungslaschen (5) mit Befestigungslöchern (9) abgewinkelt sind und auf dessen so entstehenden Boden **(4) das oder die** Gewichtelemente (6) zur Beschwerung aufgelegt sind, **wobei der Träger (7)** mit **dem** gesamten Gewicht **der Aufbauten** auf dem oder den Gewichtelementen (6) ruht und **der** Träger (7) über die Befestigungslaschen (5) mittels bekannter Befestigungsmittel **an der Vorrichtung** festspannbar ist.

2. Vorrichtung nach Anspruch 1, **dadurch gekennzeichnet, dass** der Abstand der Befestigungslaschen (5) an die Maße des Gewichtelements (6) derart angepasst ist, dass das Gewichtelement (6) zwischen den Befestigungslaschen (5) auf dem Boden (4) mit seiner ganzen Auflagefläche zur Auflage kommt.

3. Vorrichtung nach Anspruch 1, **dadurch gekennzeichnet, dass** der Materialstreifen der Befestigungsschelle (2) U-förmig gebogen ist und von den an den beiden Schmalseiten vom Boden (4) hochragenden U-Schenkeln (3) die Befestigungslaschen (5) nach außen abgewinkelt sind.

4. Vorrichtung nach Anspruch 3, **dadurch gekennzeichnet, dass** der Abstand der Befestigungslaschen (5) so an die Abmessungen des Gewichtelements (6) angepasst ist, dass bei einer Sogwirkung auf den Aufbau die Befestigungsschelle (2) mit dem Gewichtelement (6) verspannt wird.

5. Vorrichtung nach Anspruch 3, **dadurch gekennzeichnet, dass** die U-Schenkel (3) der Befestigungsschelle (2) in Bezug auf ihren Boden (4) leicht ausgestellt sind.

6. Vorrichtung nach Anspruch 3, **dadurch gekennzeichnet, dass** das in die Befestigungsschelle (2) eingelegte Gewichtelement (6) in seiner Höhe über die U-Schenkel (3) hinausragt.

7. Vorrichtung nach Anspruch 3, **dadurch gekennzeichnet, dass** ein Teil der U-Schenkel (3) der Befestigungsschelle (2) seitlich ausgebogen ist und diese ausgebogenen Teile als Befestigungslaschen (5) mit den Befestigungslöchern (9) versehen sind.

8. Vorrichtung nach Anspruch 1, **dadurch gekennzeichnet, dass** an beiden Längsseiten des den Boden (4) der Befestigungsschelle (2) bildenden Materialstreifens in einem der Abmessung des Gewichtelements (6) angepassten Abstand je ein Paar sich gegenüberstehender Befestigungslaschen (5) mit Befestigungslöchern (9) senkrecht nach oben abgewinkelt sind und diese Befestigungslaschen (5) in ihrer Höhe über ein in die Befestigungsschelle (2) eingelegtes Gewichtelement (6) hinausragen und ein auf das Gewichtelement (6) und zwischen die Befestigungslaschen (5) gelegter Träger (7) des zu tragenden Aufbaus zwischen den Befestigungslaschen (5) mittels bekannter Befestigungsmittel einspannbar ist.

9. Vorrichtung nach Anspruch 1, **dadurch gekennzeichnet, dass** an den beiden einander gegenüber liegenden Längsseiten des den Boden (4) der Befestigungsschelle (2) bildenden Materialstreifens in einem der Abmessung des Gewichtselements (6) angepassten Abstand je eine Befestigungslasche (5) mit Befestigungslöchern (9) rechtwinklig nach oben abgewinkelt ist und diese Befestigungslaschen (5) in ihrer Höhe über ein in die Befestigungsschelle (2) eingelegtes Gewichtelement (6) hinausragen und ein auf das Gewichtelement (6) und zwischen die Befestigungslaschen (5) gelegter Träger (7) des zu tragenden Aufbaus zwischen den Befestigungslaschen (5) mittels bekannter Befestigungsmittel einspannbar ist.

10. Vorrichtung nach Anspruch 8 oder 9, **dadurch gekennzeichnet, dass** in den Befestigungslaschen (5) mehrere Befestigungslöcher (9) zueinander versetzt vorgesehen sind und die Befestigungslöcher (9) zweier sich gegenüberstehender Befestigungslaschen (5) miteinander korrespondieren.

11. Vorrichtung nach Anspruch 1, **dadurch gekennzeichnet, dass** das Gewichtelement (6) aus einer Trapezplatte (10) besteht, deren Trapezfurchen (11) mit Kies oder Steinen oder Schrott befüllt sind.

12. Vorrichtung nach Anspruch 1, **dadurch gekennzeichnet, dass** das Gewichtelement (6) aus einem wannenförmigen Teil besteht, das mit Kies oder Steinen **oder Schrott** befüllt ist.

13. Vorrichtung nach Anspruch 12, **dadurch gekennzeichnet, dass** das wannenförmige Teil nach innen abgekantet ist.

14. Vorrichtung nach Anspruch 3, **dadurch gekennzeichnet, dass** die Befestigungsschelle (2) wannenförmig verlängert und mit Kies oder Steinen **oder Schrott** befüllt ist.

15. Vorrichtung nach Anspruch 3, **dadurch gekennzeichnet, dass** die Befestigungsschelle (2) wannenförmig verlängert und ihr Boden (4) als Trapezplatte (10) ausgebildet ist und die Trapezfurchen (11) mit Kies oder Steinen **oder Schrott** befüllt sind **und die Trapezberge entlang der beiden Längskanten der Befestigungsschelle (2) als Befestigungslaschen (5) ausgebildet sind.**

16. Vorrichtung nach Anspruch 1, **dadurch gekennzeichnet, dass** die Befestigungsschelle (2') zweigeteilt ist und aus zwei dünnwandigen und schmalen, parallel angeordneten Materialstreifen besteht, an deren insgesamt vier Enden jeweils eine Befestigungslasche (5') rechtwinklig hochgebogen ist, dass die freien Enden der vier Befestigungslaschen (5') zu Befestigungsösen (14) gebogen sind und die Abschnitte der Materialstreifen zwischen den Befestigungslaschen (5') gemeinsam den Boden (4') der Befestigungsschelle (2') bilden, dessen Länge an die Maße von Gewichtelementen (6) angepasst ist.

17. Vorrichtung nach Anspruch 1, **dadurch gekennzeichnet, dass die Befestigungsschelle (2') zweigeteilt ist und aus zwei dünnwandigen und schmalen** Materialstreifen besteht, deren den Boden (4') der Befestigungsschelle (2') bildenden Abschnitte der Materialstreifen miteinander gekreuzt sind und an deren insgesamt vier Enden jeweils eine Befestigungslasche (5') rechtwinklig hochgebogen ist, dass die freien Enden der vier Befestigungslaschen (5') zu Befestigungsösen (14) gebogen sind und die Abschnitte der gekreuzten Materialstreifen zwischen den Befestigungslaschen (5') gemeinsam den Boden (4') der Befestigungsschelle (2') bilden, dessen Länge an die Maße von Gewichtelementen (6) angepasst ist

18. Vorrichtung nach Anspruch 17, **dadurch gekennzeichnet, dass** die Materialstreifen der Befestigungsschelle (2') an ihrem Kreuzungspunkt fest miteinander verbunden sind.

19. Vorrichtung nach Anspruch 16, **dadurch gekennzeichnet, dass** die beiden parallel angeordneten Materialstreifen der Befestigungsschelle (2') an den Stoßstellen der den Boden (4') der Befestigungsschelle (2') bildenden Abschnitte und der rechtwinklig abgebogenen Befestigungslaschen (5') durch Drahtschlingen (15) miteinander verbunden und auf einem durch die Länge der Drahtschlingen (15) wählbaren Abstand gehalten sind.

20. Vorrichtung für die Montage von Aufbauten auf flachem Untergrund oder einer flachen Ebene oder einem Untergrund oder einer Ebene mit geringer Neigung oder mit geringen Unebenheiten, **mit einem oder mehreren Gewichtelementen (6)** zur Positionssicherung wobei die Aufbauten von einem **Träger (7)** getragen sind, **gekennzeichnet durch eine** Befestigungsschelle (2'), **die** aus einem einzigen, dünnwandigen und schmalen Materialstreifen besteht, der auf seiner halben Länge vierfach rechtwinklig **und** in entgegengesetzter Richtung zweifach rechtwinklig abgebogen ist, so dass eine nach oben stehende Befestigungslasche (5') in Form eines nach unten offenen Rechtecks entsteht, **wobei** von **den unteren Ecken dieser Beiestigungslasche (5') rechtwinklig, horizontal und zueinander parallel zwei Abschnitte des Materialstreifens (2') abragen, die gemeinsam den Boden (4') der Befestigungsschelle (2') bilden,** wobei die Länge der den Boden (4') bildenden Abschnitte an die Maße des oder der Gewichtselemente (6) angepasst ist und wobei die beiden überstehenden Enden des Materialstreifens von den den Boden (4') der Befestigungsschelle (2') bildenden Abschnitten senkrecht nach oben abgewinkelt sind und so zwei weitere Befestigungslaschen (5') bilden und **wobei** die freien Enden dieser beiden Befestigungslaschen (5') zu Befestigungsösen (14) gebogen sind, **wobei** auf dem Boden (4') das oder die Gewichtelemente (6) zur Beschwerung aufgelegt sind, wobei **der Träger** (7) **mit dem** gesamten Gewicht **der Aufbauten** auf dem oder den Gewichtelementen (6) ruht und der Träger (7) über die Befestigungslaschen (5') mittels bekannter Befestigungsmittel an der **Vorrichtung** festspannbar ist.

21. Vorrichtung nach einem der Ansprüche 16 bis 19, **dadurch gekennzeichnet, dass** der oder die Materialstreifen, aus denen die Befestigungsschelle (2') besteht, drahtförmig sind.

22. Vorrichtung nach Anspruch 16 oder 19, **dadurch gekennzeichnet, dass** die freien Enden der Befestigungslaschen (5') schraubenförmig mehrfach zu Befestigungsösen (14) gebogen sind.

23. Vorrichtung nach Anspruch 16 oder 19, **dadurch gekennzeichnet, dass** die Befestigungslaschen (5') über einen auf dem Gewichtelement (6) aufgelegten Träger (7) hinausragen und über dem Träger (7) miteinander fest verbunden und verspannt sind.

## Claims

1. Device for mounting structures on a flat underlying surface or a flat plane or an underlying surface or plane having a slight incline or slight irregularities, having one or more weight elements (6) for securing the position thereof, wherein the structures are carried by a carrier (7), **characterized by** a fastening clamp (2) which consists of a thin-walled material strip from which fastening tabs (5) having fastening holes (9) are angled in a U-shaped manner and on the resulting base (4) of which the weight element(s) (6) are placed for weighting purposes, wherein the carrier (7) rests on the weight element(s) (6) with the entire weight of the structures and the carrier (7) is able to be clamped securely to the device via the fastening tabs (5) by means of known fastening means.

2. Device according to Claim 1, **characterized in that** the spacing of the fastening tabs (5) is adapted to the dimensions of the weight element (6) such that the weight element (6) comes to rest on the base (4) with its entire bearing surface between the fastening tabs (5).

3. Device according to Claim 1, **characterized in that** the material strip of the fastening clamp (2) is bent in a U-shaped manner and the fastening tabs (5) are angled outwards from the U-shaped legs (3) projecting up from the base (4) on the two narrow sides.

4. Device according to Claim 3, **characterized in that** the spacing of the fastening tabs (5) is adapted to the dimensions of the weight element (6) such that in the event of a pull on the structure, the fastening clamp (2) is braced with the weight element (6).

5. Device according to Claim 3, **characterized in that** the U-shaped legs (3) of the fastening clamp (2) are slightly flared with respect to the base (4) thereof.

6. Device according to Claim 3, **characterized in that** the weight element (6) introduced into the fastening clamp (2) projects vertically beyond the U-shaped legs (3).

7. Device according to Claim 3, **characterized in that** a part of the U-shaped legs (3) of the fastening clamp (2) is bent out laterally and these bent-out parts are provided, as fastening tabs (5), with the fastening holes (9).

8. Device according to Claim 1, **characterized in that** a pair of opposing fastening tabs (5) having fastening holes (9) are angled vertically upwards on each of the two longitudinal sides of the material strip forming the base (4) of the fastening clamp (2), at a spacing adapted to the dimensions of the weight element (6), and these fastening tabs (5) project vertically beyond a weight element (6) introduced into the fastening clamp (2), and a carrier (7), placed on the weight element (6) and between the fastening tabs (5), of the structure to be carried is able to be clamped in place between the fastening tabs (5) by means of known fastening means.

9. Device according to Claim 1, **characterized in that** a fastening tab (5) having fastening holes (9) is angled upwards at right angles on each of the two mutually opposing longitudinal sides of the material strip forming the base (4) of the fastening clamp (2), at a spacing adapted to the dimensions of the weight element (6), and these fastening tabs (5) project vertically beyond a weight element (6) introduced into the fastening clamp (2), and a carrier (7), placed on the weight element (6) and between the fastening tabs (5), of the structure to be carried is able to be clamped in place between the fastening tabs (5) by means of known fastening means.

10. Device according to Claim 8 or 9, **characterized in that** a plurality of fastening holes (9) are provided in the fastening tabs (5) in an offset manner with respect to one another, and the fastening holes (9) of two opposing fastening tabs (5) correspond to one another.

11. Device according to Claim 1, **characterized in that** the weight element (6) consists of a trapezoidal plate (10), the trapezoidal grooves (11) of which are filled with the gravel or stones or scrap.

12. Device according to Claim 1, **characterized in that** the weight element (6) consists of a trough-shaped part which is filled with gravel or stones or scrap.

13. Device according to Claim 12, **characterized in that** the trough-shaped part is bent inwards.

14. Device according to Claim 3, **characterized in that** the fastening clamp (2) is extended in a trough-shaped manner and is filled with gravel or stones or scrap.

15. Device according to Claim 3, **characterized in that** the fastening clamp (2) is extended in a trough-shaped manner and its base (4) is configured as a trapezoidal plate (10) and the trapezoidal grooves (11) are filled with gravel or stones or scrap and the trapezoidal peaks are configured as fastening tabs (5) along the two longitudinal edges of the fastening clamp (2).

16. Device according to Claim 1, **characterized in that** the fastening clamp (2') is in two parts and consists of two thin-walled and narrow material strips arranged parallel to one another, at the total of four ends of which a respective fastening tab (5') is bent up at right angles, and **in that** the free ends of the four fastening tabs (5') are bent to form fastening lugs (14) and the portions of the material strips between the fastening tabs (5') jointly form the base (4') of the fastening clamp (2'), the length of which is adapted to the dimensions of the weight elements (6).

17. Device according to Claim 1, **characterized in that** the fastening clamp (2') is in two parts and consists of two thin-walled and narrow material strips, the material strip portions of which that form the base (4') of the fastening clamp (2') cross one another and at the total of four ends of which a respective fastening tab (5') is bent up at right angles, and **in that** the free ends of the four fastening tabs (5') are bent to form fastening lugs (14) and the portions of the crossed material strips between the fastening tabs (5') jointly form the base (4') of the fastening clamp (2'), the length of which is adapted to the dimensions of the weight elements (6).

18. Device according to Claim 17, **characterized in that** the material strips of the fastening clamp (2') are connected firmly together at their crossing point.

19. Device according to Claim 16, **characterized in that** the two parallel material strips of the fastening clamp (2') are connected together by wire loops (15) at the joints between the portions forming the base (4') of the fastening clamp (2') and the fastening tabs (5') bent at right angles, and are kept at a distance that is selectable by the length of the wire loops (15).

20. Device for mounting structures on a flat underlying surface or a flat plane or an underlying surface or plane having a slight incline or slight irregularities, having one or more weight elements (6) for securing the position thereof, wherein the structures are carried by a carrier (7), **characterized by** a fastening clamp (2') which consists of a single, thin-walled and narrow material strip which is bent four times at right angles and twice at right angles in the opposite direction halfway along its length, such that an upwardly protruding fastening tab (5') in the form of a downwardly open rectangle is formed, wherein two portions of the material strip (2') project down from the lower corners of this fastening tab (5') at right angles, in a horizontal and mutually parallel manner, said portions jointly forming the base (4') of the fastening clamp (2'), wherein the length of the portions forming the base (4') is adapted to the dimensions of the weight element(s) (6) and wherein the two projecting ends of the material strip are angled vertically upwards from the portions forming the base (4') of the fastening clamp (2') and thus form two further fastening tabs (5'), and wherein the free ends of these two fastening tabs (5') are bent to form fastening lugs (14), wherein the weight element(s) (6) are placed on the base (4') for weighting purposes, wherein the carrier (7) rests on the weight element(s) (6) with the entire weight of the structures and the carrier (7) is able to be clamped securely to the device via the fastening tabs (5') by means of known fastening means.

21. Device according to one of Claims 16 to 19, **characterized in that** the material strip(s) of which the fastening clamp (2') consists are in the form of wires.

22. Device according to Claim 16 or 19, **characterized in that** the free ends of the fastening tabs (5') are bent helically multiple times to form fastening lugs (14).

23. Device according to Claim 16 or 19, **characterized in that** the fastening tabs (5') project beyond a carrier (7) placed on the weight element (6) and are firmly connected together and braced via the carrier (7).

## Revendications

1. Dispositif pour le montage de constructions sur un sous-sol plat ou un plan plat ou sur un sous-sol ou un plan de faible inclinaison ou avec de faibles aspérités, avec un ou plusieurs éléments de poids (6) servant à maintenir la position, les constructions étant supportées par un support (7), **caractérisé par** un collier de fixation (2) réalisé à partir d'une bande de matière à paroi mince à partir de laquelle des brides de fixation (5) en forme de U dotées de trous de fixation (9) sont coudées et sur le fond (4) ainsi produit de laquelle le ou les éléments de poids (6) sont appliqués pour le lestage, le support (7) reposant avec la totalité du poids des constructions sur le ou les éléments de poids (6) et le support (7) pouvant être fixé par tension au dispositif via les brides de fixation (5), par le biais de moyens de fixation connus.

2. Dispositif selon la revendication 1, **caractérisé en ce que** l'écartement des brides de fixation (5) est adapté de telle sorte aux dimensions de l'élément de poids (6) que l'élément de poids (6) puisse appuyer entre les brides de fixation (5) sur le fond (4) avec la totalité de sa surface portante.

3. Dispositif selon la revendication 1, **caractérisé en ce que** la bande de matière du collier de fixation (2) est courbée en forme de U et que les brides de fixation (5) sont coudées vers l'extérieur depuis les branches du U (3) saillant vers le haut, au niveau des deux côtés étroits du fond (4).

4. Dispositif selon la revendication 3, **caractérisé en ce que** l'écartement des brides de fixation (5) est adapté de telle sorte aux dimensions de l'élément de poids (6) qu'en cas d'effet d'aspiration sur la construction, le collier de fixation (2) soit fixé par tension à l'élément de poids (6).

5. Dispositif selon la revendication 3, **caractérisé en ce que** les branches du U (3) du collier de fixation (2) sont réalisées de façon légère par rapport à son fond (4).

6. Dispositif selon la revendication 3, **caractérisé en ce que** l'élément de poids (6) inséré dans le collier de fixation (2) ressort dans sa hauteur au-delà des branches du U (3).

7. Dispositif selon la revendication 3, **caractérisé en ce qu'**une partie des branches du U (3) du collier de fixation (2) sont courbées vers l'extérieur en côté et qu'elles sont pourvues de pièces courbées vers l'extérieur servant de brides de fixation (5) dotées des trous de fixation (9).

8. Dispositif selon la revendication 1, **caractérisé en ce que** respectivement une paire de brides de fixation (5) opposées dotées des trous de fixation (9) sont coudées perpendiculairement vers le haut au niveau des deux côtés longitudinaux de la bande de matière formant le fond (4) du collier de fixation (2) à une certaine distance adaptée à la dimension de l'élément de poids (6) et que ces brides de fixation (5) sont coudées dans leur hauteur par le biais d'un élément de poids (6) inséré dans le collier de fixation (2) et qu'un support (7), placé sur l'élément de poids (6) et entre les brides de fixation (5), de la construction à supporter peut être serré entre les brides de fixation (5) à l'aide de moyens de fixation connus.

9. Dispositif selon la revendication 1, **caractérisé en ce que** respectivement une bride de fixation (5) dotée de trous de fixation (9) est coudée vers le haut à angle droit au niveau des deux côtés longitudinaux opposés de la bande de matière formant le fond (4) du collier de fixation (2) à une distance adaptée à la dimension de l'élément de poids (6) et que ces brides de fixation (5) ressortent dans leur hauteur au-delà d'un élément de poids (6) inséré dans le collier de fixation (2) et qu'un support (7) placé sur l'élément de poids (6) et entre les brides de fixation (5) de la construction à supporter entre les brides de fixation (5) peut être serré à l'aide de moyens de fixation connus.

10. Dispositif selon la revendication 8 ou 9, **caractérisé en ce que** plusieurs trous de fixation (9) sont prévus de façon décalée les uns par rapport aux autres dans les brides de fixation (5) et que les trous de fixation (9) des deux brides de fixation (5) opposées correspondent les uns avec les autres.

11. Dispositif selon la revendication 1, **caractérisé en ce que** l'élément de poids (6) se compose d'une plaque trapézoïdale (10) dont les sillons de trapèze (11) sont remplis de graviers ou de pierres ou de ferraille.

12. Dispositif selon la revendication 1, **caractérisé en ce que** l'élément de poids (6) se compose d'une partie en forme de bac remplie de graviers ou de pierres ou de ferraille.

13. Dispositif selon la revendication 12, **caractérisé en ce que** la partie en forme de bac est chanfreinée vers l'intérieur.

14. Dispositif selon la revendication 3, **caractérisé en ce que** le collier de fixation (2) est rallongé en forme de bac et rempli de graviers ou de pierres ou de ferraille.

15. Dispositif selon la revendication 3, **caractérisé en ce que** le collier de fixation (2) est rallongé en forme de bac et que son fond (4) est réalisé sous la forme d'une plaque trapézoïdale (10) et que les sillons de trapèze (11) sont remplis de graviers ou de pierres ou de ferraille et que les éminences de trapèze sont réalisées le long des deux bords longitudinaux du collier de fixation (2) sous la forme de brides de fixation (5).

16. Dispositif selon la revendication 1, **caractérisé en ce que** le collier de fixation (2') est divisé en deux et se compose de deux bandes de matière à paroi mince et étroites disposées parallèlement l'une par rapport à l'autre, qu'une bride de fixation (5') à angle droit est respectivement courbée vers le haut au niveau des extrémités au nombre de quatre au total, que les extrémités libres des quatre brides de fixation (5') sont courbées en direction des oeillets de fixation (14) et que les sections des bandes de matière forment ensemble, entre les brides de fixation (5'), le fond (4') du collier de fixation (2') dont la longueur est adaptée aux dimensions des éléments de poids (6).

17. Dispositif selon la revendication 1, **caractérisé en ce que** le collier de fixation (2') est divisé en deux et se compose de deux bandes de matière à paroi mince et étroites dont les sections des bandes de matière formant le fond (4') du collier de fixation (2') sont croisées entre elles et qu'une bride de fixation (5') est respectivement courbée vers le haut à angle droit au niveau de ses extrémités au nombre de quatre au total, que les extrémités libres des quatre brides de fixation (5') sont courbées pour former les oeillets de fixation (14) et que les sections des bandes de matière croisées forment ensemble, entre les brides de fixation (5'), le fond (4') du collier de fixation (2') dont la longueur est adaptée aux dimensions des éléments de poids (6).

18. Dispositif selon la revendication 17, **caractérisé en ce que** les bandes de matière du collier de fixation (2') sont reliées fixement entre elles au niveau de leur point d'intersection.

19. Dispositif selon la revendication 16, **caractérisé en ce que** les deux bandes de matière, disposées parallèlement, du collier de fixation (2') sont reliées entre elles au niveau des points de collision des sections formant le fond (4') du collier de fixation (2') et que les brides de fixation (5') courbées à angle droit sont reliées entre elles par des boucles en fil métallique (15) et sont maintenues à une distance pouvant être choisie en fonction de la longueur de la boucle de fil métallique (15).

20. Dispositif pour le montage de constructions sur un sous-sol plat ou un plan plat ou sur un sous-sol ou un plan de faible inclinaison ou avec de faibles aspérités, avec un ou plusieurs éléments de poids (6) servant à maintenir la position, les constructions étant supportées par un support (7), **caractérisé par** un collier de fixation (2') réalisé à partir d'une unique bande de matière étroite et à paroi mince courbée sur la moitié de sa longueur à quatre reprises à angle droit et à deux reprises à angle droit dans la direction opposée, de sorte qu'une bride de fixation (5') orientée vers le haut apparaît sous la forme d'un rectangle ouvert vers le bas, deux sections de la bande de matière (2') saillant à angle droit à partir des coins inférieurs de cette bride de fixation (5'), horizontalement et parallèlement l'une par rapport à l'autre, ces sections formant ensemble le fond (4') du collier de fixation (2'), la longueur des sections formant le fond (4') étant adaptée aux dimensions du ou des éléments de poids (6) et les deux extrémités saillantes de la bande de matière étant coudées perpendiculairement vers le haut à partir des sections formant le fond (4') du collier de fixation (2') et formant ainsi deux brides de fixation (5') supplémentaires et les extrémités libres de ces deux brides de fixation (5') étant courbées pour former les oeillets de fixation (14), le ou les éléments de poids (6) étant placés sur le fond (4`) pour le lestage, le support (7) reposant avec la totalité du poids des constructions sur le ou les éléments de poids (6) et le support (7) pouvant être fixé par tension au dispositif via les brides de fixation (5') à l'aide des moyens de fixation connus.

21. Dispositif selon l'une quelconque des revendications 16 à 19, **caractérisé en ce que** le ou les bandes de matière composant le collier de fixation (2') sont en forme de fil métallique.

22. Dispositif selon la revendication 16 ou 19, **caractérisé en ce que** les extrémités libres des brides de fixation (5') sont courbées à plusieurs reprises en forme de vis pour former des oeillets de fixation (14).

23. Dispositif selon la revendication 16 ou 19, **caractérisé en ce que** les brides de fixation (5') ressortent au-delà d'un support (7) placé sur l'élément de poids (6) et sont tendues et reliées fixement entre elles via le support (7).
